# EUROPEAN PATENT APPLICATION

(11) **EP 4 841 828 A1**
(43) Date of publication of application: **18.11.2026**
(21) Application number: 25739108.6
(22) Date of filing: 09.01.2025
(51) Int. Cl.: H01Q 13/02, H01Q 5/55, H01Q 21/06, H01Q 1/32, G01S 7/00, G01S 13/00

(54) **ANTENNA**

(30) Priority: 09.01.2024 KR 20240003578
(71) Applicant: LG Innotek Co., Ltd., Seoul 07796 (KR)
(72) Inventor: PARK, Woo Cheon, Seoul 07796 (KR); HONG, Jae Wan, Seoul 07796 (KR)
(74) Representative: DREISS Patentanwälte PartG mbB
(86) International application number: PCT/KR2025/000552
(87) International publication number: WO 2025/150948

(57) **Abstract**

An antenna, according to an embodiment of the present invention, comprises: a first layer in which a plurality of radiation slots are formed; a second layer having formed on the upper portion thereof a branch structure connecting the plurality of radiation slots with a waveguide and having formed on the lower portion thereof an upper region of the waveguide; and a third layer having formed on the upper portion thereof a lower region of the waveguide corresponding to the upper region of the waveguide formed in the second layer and having formed on the lower portion thereof a signal input/output unit connected to the waveguide.

## Description

### [Technical Field]

The teachings in accordance with exemplary and non-limiting embodiments of the present invention relate generally to an antenna, and more particularly to a vehicle-mounted waveguide-fed radar antenna.

### [Background of Arts]

4D imaging radar combines height data with the distance, angle, and speed data required for 3D radar to form a high-resolution point cloud (a collection of three-dimensional points), and then uses deep learning to recognize objects in the point cloud-based spatial image.

In a vehicle, 4D imaging radar can identify the vertical position of a detected target, allowing it to distinguish whether the detected target is a target on the road surface, such as a manhole, or a target high above the road, such as a tunnel entrance or sign, enabling it to recognize moving and driving objects, etc. and can be used for autonomous driving. In addition, the in-cabin 4D imaging radar installed inside the vehicle is installed in the upper part of the vehicle interior to detect the number of passengers, the driver's posture, drowsiness, pulse, and breathing, or to detect moving objects in the rear seats (such as children or pets) and use it for the Rear Occupancy Alert (ROA) function that notifies the driver of such objects.

Such 4D imaging radars require multi-channel (e.g., 192-channel) antenna technology for high resolution, and for this purpose, a 1-chip RFIC (Radio Frequency Integrated Circuit) that provides 12 transmitting antennas and 16 receiving antennas is used, or a 4-chip RFIC that provides 3 transmitting antennas and 4 receiving antennas is used by cascading.

When the antenna for vehicle radar is implemented as a waveguide-powered antenna, the radiation signal is transmitted to the uppermost layer through the internal waveguide and radiated as a radiator. When the waveguide and radiator structures are implemented in multiple layers, performance degradation due to tolerance may occur in each layer, so a design is required to improve performance degradation due to tolerance and reduce costs.

### [Detailed Description of the Invention]

### [Technical Subjects]

The technical challenge that the present invention seeks to solve is to provide an antenna that can improve performance degradation due to tolerance.

### [Technical Solution]

To solve the above-mentioned technical problems, there may be provided an antenna according to one exemplary embodiment of the present invention, comprising: a first layer in which a plurality of radiation (radiating) slots are formed; a second layer in which a branching structure connecting the plurality of radiation slots and a waveguide is formed at the upper portion, and an upper region of the waveguide is formed at the lower portion; and a third layer in which a lower region of the waveguide corresponding to the upper region of the waveguide formed in the second layer is formed at the upper portion, and a signal input/output part connected to the waveguide is formed at the lower portion.

Preferably, but not necessarily, the plurality of radiation slots may include four radiation slots, and the branching structure may include a 1-4 branching structure.

Preferably, but not necessarily, the branching structure may include: a first horn structure formed at a position corresponding to the center of the four radiation slots and connected to the waveguide; and a second horn structure having a lower portion connected to the first horn structure and an upper portion connected to the four slots.

Preferably, but not necessarily, the four radiation slots may be so formed as to be spaced apart from each other, and the central axis of the first horn structure may overlap with a wall between two of the four radiation slots.

Preferably, but not necessarily, the wall between the two radiation slots that overlap with the central axis of the first horn structure may extend to form part of the second horn structure region.

Preferably, but not necessarily, the sum of the heights of the first horn structure and the second horn structure may be 0.63 to 0.73 times the signal wavelength.

Preferably, but not necessarily, the height of the second horn structure may be 0.4 to 0.5 times the signal wavelength.

Preferably, but not necessarily, the four radiation slots may be formed in a row.

Preferably, but not necessarily, the width of the two slots disposed in the center of the four radiation slots may be longer than a width of the two slots disposed at the periphery.

Preferably, but not necessarily, the width of the two slots disposed in the center may be 0.69 times the signal wavelength, and the width of the two slots disposed in the outer region may be 0.64 times the signal wavelength.

Preferably, but not necessarily, the first layer may be thicker than the second layer, and the second layer may be thicker than the third layer.

Preferably, but not necessarily, the thickness of the first layer may be 1.14 times the signal wavelength, the thickness of the second layer may be 0.98 times the signal wavelength, and the thickness of the third layer may be 0.76 times the signal wavelength.

Preferably, but not necessarily, the waveguide may include: a first waveguide connected to at least some of the plurality of radiation slots; and a second waveguide connected to at least some of the plurality of radiation slots and to some other than the first waveguide, wherein the first waveguide and the second waveguide may be formed on different layers when they intersect in a first direction.

Preferably, but not necessarily, at least one of the first waveguide or the second waveguide may include a transition path that bypasses a layer in which another waveguide is formed and another layer in an area where they intersect.

To solve the above-mentioned technical problems, there may be provided a vehicle radar module according to one embodiment of the present invention, comprising: an RF module that transmits and receives RF signals; and an antenna module that is connected to the input and output parts of the RF module and radiates RF signals, wherein the antenna module includes any one of the antennas.

To solve the above-mentioned technical problems, there may be provided antenna according to a second embodiment of the present invention, comprising: a plurality of second waveguides arranged at a different height from the first waveguide to avoid overlap with the first waveguide, and a plurality of transition parts to transition from the height of the second waveguide to the height of the first waveguide to connect the second waveguide to an antenna radiator.

Preferably, but not necessarily, each of the above transition parts may include a third waveguide formed at the same height as one distal end of the second waveguide and the first waveguide, a fourth waveguide for vertically connecting one distal end of the second waveguide and the third waveguide, and a T junction for distributing the RF transmission signal of the third waveguide or synthesizing the RF reception signal received from an antenna radiator, and the length of all the third waveguides corresponding to the plurality of transition sections is matched to a predetermined length.

Preferably, but not necessarily, the T junction of the transition part may have a slanted (inclination) part formed at an upper portion of the vertically positioned input terminal, and a wedge-shaped depression part formed in the center of the horizontal branching end.

Preferably, but not necessarily, the third waveguide of the transition part may have both ends of the lower side brought in to a predetermined length, and an slanted part with an angle of 16 to 35° may be formed on the inlet surface.

Preferably, but not necessarily, one distal end of the second waveguide of the transition part may have a staircase formed in two stages, and the lower staircase surface may be led to the cross path side, and a slanted surface with an angle of 16 to 35° may be formed on the higher staircase surface.

Preferably, but not necessarily, the fourth waveguide of the transition part may be formed with a predetermined internal area to form a frequency bandwidth according to the physical size of the waveguide.

To solve the above-mentioned technical problems, there may be provided an antenna manufacturing method according to the second embodiment of the present invention, comprising: a first step of forming a length of all third waveguides corresponding to a plurality of transition parts to a predetermined length, a second step of forming the height and width of the branch point of the T junction of the transition part and forming a branch point angle of 5 to 35°, and a third step of surface-moving both ends of the lower surface of the third waveguide of the transition section, and forming an angle of inclination of 5 to 35°, a fourth step of forming a second waveguide of the transition portion having a step at one distal end in two steps, surface-moving the lower staircase surface to the cross-path side, -surface-moving the higher staircase surface, and forming an angle of inclination of 5 to 35°, and a fifth step of forming an internal area of the fourth waveguide of the transition part to a predetermined area.

Preferably, but not necessarily, the second step may be performed by lowering the height of the branch point by 0.39 λ (λ is the wavelength of the operating frequency) and surface-moving the branch point width by 0.257λ on both sides to form an angle of 30°.

Preferably, but not necessarily, the third step may be performed by surface-moving the width of the lower side of the third waveguide by 0.257 λ (λ is the wavelength of the operating frequency) on both sides to form an angle of inclination of 30°.

Preferably, but not necessarily, the fourth step may be performed by surface-moving the low staircase surface by 0.128 λ (λ is the wavelength of the operating frequency) toward the cross-path at the junction of the second waveguide connected to the fourth waveguide, and surface-moving the high staircase surface by 0.257 λ on both sides to form an angle of 30°.

Preferably, but not necessarily, the fifth step may form an internal width of the fourth waveguide by 0.603 λ.

### [Advantageous Effects]

According to embodiments of the present invention, two layers with a double-branched structure can be integrated into one layer to transmit an even electric field distribution. This reduces the number of layers that make up the entire antenna, thereby reducing production costs and reducing the performance degradation of the tolerances generated in each layer. In addition, it can be applied to a multi-array antenna by applying the waveguide transmission optimal structure technology.

In addition, the 4D image radar for vehicles with limited size can solve the problem of waveguide overlap through cross (intersecting) paths without adding layers, which reduces the dependency on RFIC chips when designing antennas and also reduces manufacturing costs.

### [Brief Description of Drawings]

FIG. 1 is an antenna according to one embodiment of the present invention.
FIG. 2 is a drawing for explaining the antenna according to one embodiment of the present invention.
FIG. 3 is an antenna according to a comparative example of the present invention.
FIGS. 4 and 5 are drawings for explaining the antenna according to one embodiment of the present invention.
FIGS. 6 to 10 show the performance measurement results of the antenna according to one embodiment of the present invention.
FIG. 11 is a block diagram of a radar module according to one embodiment of the present invention.
FIG. 12 is a layout diagram of the antenna according to a second embodiment of the present invention.
FIGS. 13 and 14 are schematic drawings of an antenna according to a second embodiment of the present invention.
FIG. 15 is a schematic diagram showing the side cross-section of the antenna according to the second embodiment of the present invention.
FIGS. 16 and 17 are schematic diagrams showing the normal and cross paths of the waveguide in an antenna according to a second embodiment of the present invention.
FIG. 18 is a top view of the normal path waveguide layer in an antenna according to a second embodiment of the present invention.
FIG. 19 is a top view of the cross path waveguide layer in the antenna according to the second embodiment of the present invention.
FIG. 20 is a flow chart showing an antenna manufacturing method according to a second embodiment of the present invention.
FIG. 21 is a drawing for explaining the first optimization process of the antenna according to the second embodiment of the present invention.
FIG. 22 is a drawing showing the electric field distribution in the waveguide after the first optimization of the antenna according to the second embodiment of the present invention.
FIG. 23 is a graph showing the return loss measured at each port after the first optimization of the antenna according to the second embodiment of the present invention.
FIGS. 24 and 25 are drawings for explaining the second optimization process of the antenna according to the second embodiment of the present invention.
FIG. 26 shows the field distribution of the waveguide after the second optimization of the antenna according to the second embodiment of the present invention.
FIG. 27 is a graph showing the return loss measured at each port after the second optimization of the antenna according to the second embodiment of the present invention.

### [Best Mode]

Hereinafter, exemplary embodiments of the present invention will be described in detail with reference to the accompanying drawings.

However, the present invention is not limited to the given exemplary embodiments described, but may be implemented in a variety of different forms, and one or more of components among the exemplary embodiments may be optionally combined or substituted between embodiments within the scope of the present invention.

Furthermore, terms (including technical and scientific terms) used in the embodiments of the present invention, unless expressly specifically defined and described, are to be interpreted in the sense in which they would be understood by a person of ordinary skill in the art to which the present invention belongs, and commonly used terms, such as dictionary-defined terms, are to be interpreted in light of their contextual meaning in the relevant art.

Furthermore, the terms used in the embodiments of the invention are intended to describe the embodiments and are not intended to limit the invention.

In this specification, the singular may include the plural unless the context otherwise requires, and references to "at least one (or more) of A and (or) B and C" may include one or more of any combination of A, B, and C that may be assembled.

In addition, the terms first, second, A, B, (a), (b), and the like may be used to describe components of embodiments of the invention. Such terms are intended only to distinguish one component from another, and are not intended to limit the nature or sequence or order of such components by such terms.

Furthermore, when a component is described as "connected," "coupled," or "attached" to another component, it can include cases where the component is "connected," "coupled," or "attached" to the other component directly, as well as cases where the component is "connected," "coupled," or "attached" to another component that is between the component and the other component.

Furthermore, when described as being formed or disposed "above" or "below" each component, "above" or "below" includes not only when two components are in direct contact with each other, but also when one or more other components are formed or disposed between the two components. Furthermore, when expressed as "above" or "below", it may include the meaning of upward as well as downward with respect to a single component.

The variant examples according to this embodiment may include some configurations of each embodiment and some configurations of another embodiment. In other words, the variant examples may include one embodiment of various embodiments, but some configurations are omitted and some configurations of another embodiment corresponding to the omitted configurations are included. Or, it could be the opposite. The features, structures, effects, etc. to be explained in the embodiments are included in at least one embodiment and are not necessarily limited to only one embodiment. Furthermore, the features, structures, and effects illustrated in each embodiment may be combined or modified with respect to other embodiments by those skilled in the art in the field to which the embodiments belong. Therefore, the contents related to these combinations and variations should be interpreted as being included in the scope of the embodiments.

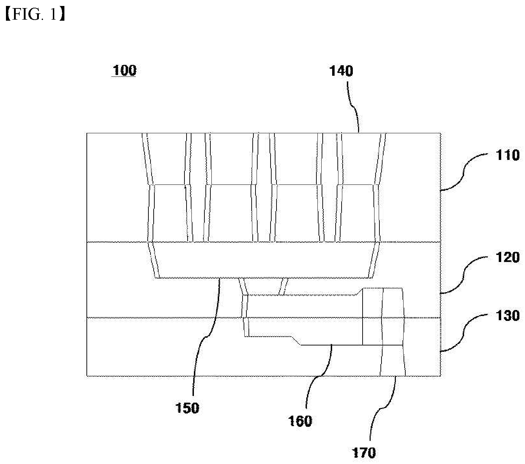

FIG. 1 is an antenna according to one embodiment of the present invention.

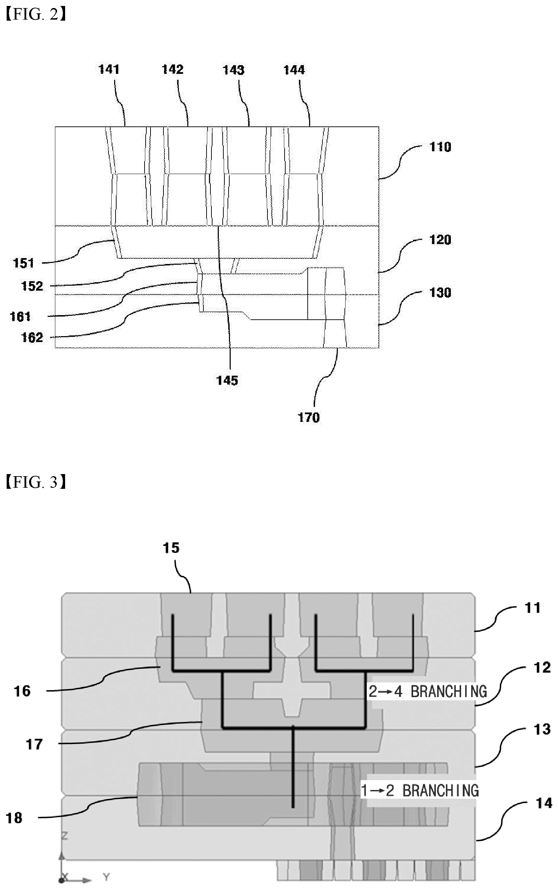

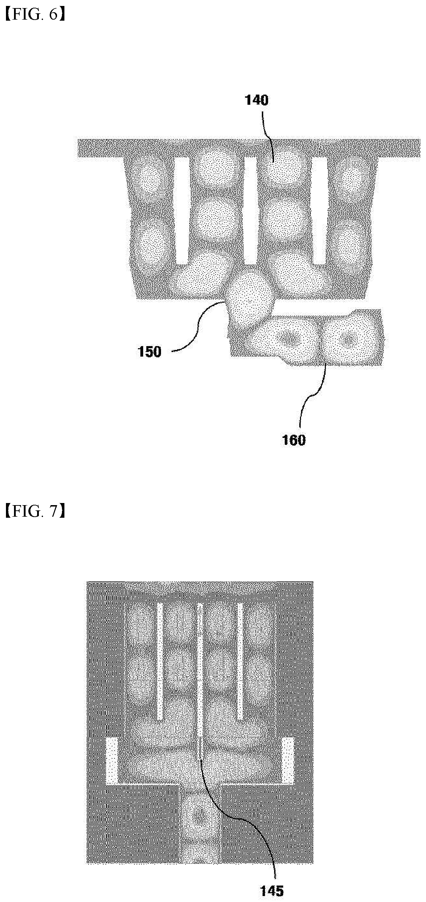

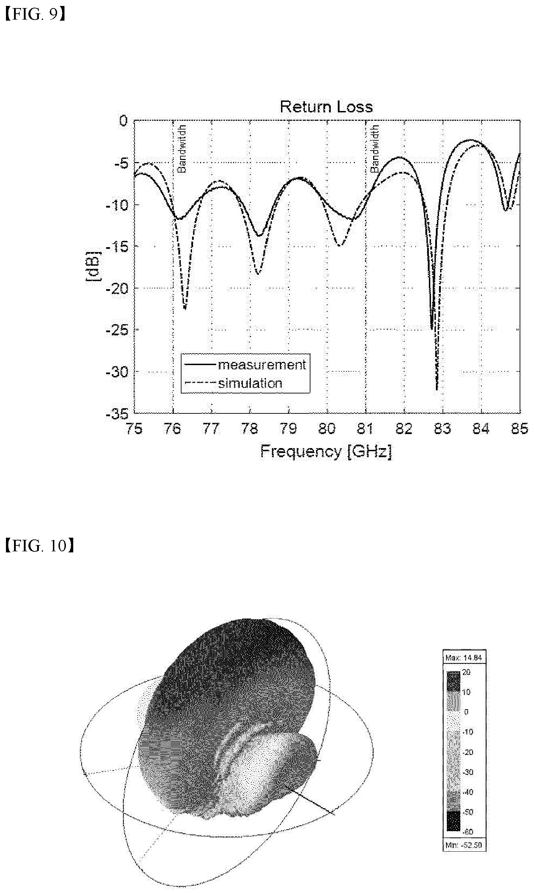

FIGS. 2, 4 and 5 are drawings for explaining the antenna according to one embodiment of the present invention, and FIG. 3 is an antenna according to a comparative example of the present invention, and FIGS. 6 to 10 show the performance measurement results of the antenna according to one embodiment of the present invention.

An antenna (100) according to one embodiment of the present invention comprises a radiation slot (140), a branching structure (150), a waveguide (160), and a signal input/output part (170), and is composed of multiple layers.

The antenna according to one embodiment of the present invention may be a waveguide-fed radar antenna for vehicles, and may be various other antennas using waveguides. First, the antenna according to one embodiment of the present invention is a vehicle radar antenna, which consists of 12 transmitting antennas and 16 receiving antennas, and each transmitting/receiving antenna is a horn antenna consisting of four array horn radiators, and the RFIC chip and each horn radiator are connected via a waveguide. This structure is just one example, and it can be modified in various ways depending on the type and performance of the RFIC chip, module size, target performance, application, etc.

The antenna according to one embodiment of the present invention may be one of the transmitting (Tx) antenna and 16 receiving (Rx) antennas of the waveguide-fed radar antenna for vehicles, and it may radiate signals to the outside through multiple radiation slots or receive signals from the outside.

The antenna according to one embodiment of the present invention may comprise a radiation (radiating) slot (140), a branching structure (150), a waveguide (160), and a signal input/output part (170), and may comprise a first layer (110), a second layer (120), and a third layer (130). Here, the first to third layers are stacked in order to form, but the first layer (110) may be the topmost layer or outermost layer in the direction in which the signal is radiated to the outside. The third floor (130) may be the lowest floor, and the second floor (120) may be stacked between the first floor (110) and the third floor (130).

A plurality of radiation (radiating) slots (140) is formed on the first floor (110). A plurality of radiation slots (140) may include four radiation slots. It may include the first to fourth radiation slots (141 to 144). At this time, the radiation slot (140) may be formed in a horn structure. The cross-section of the radiation slot (140) may be square, and may be formed as a horn structure with an area that becomes wider as it extends in the radial direction. Alternatively, the cross-section of the radiation slot (140) may be circular or may be formed in various shapes other than a square. The four radiation slots (141 to 144) may be formed at a preset distance (spaced) apart from one another, or a wall may be formed between the radiation slots. The four radiation slots (141 to 144) may be arranged in a row. Alternatively, they can be arranged in a 2x2 pattern in four directions from the center, or in various other patterns.

On the second floor (120), a branching structure (150) and a waveguide (160) are formed. The branching structure (150) may be formed at the top of the second layer (120) that is in contact with the first layer (110) in which the radiation slots (140) are formed. The waveguide (160) may be formed in the lower portion of the second layer (120). The upper region of the waveguide (160) may be formed on the second layer (120), and the lower region of the waveguide (160) may be formed on the third layer (130), and the second layer (120) and the third layer (130) may be combined to form a cavity, thereby forming a single waveguide (160). The upper region (161) of the waveguide (160) may be formed in the shape of the waveguide (160) cross-section divided in half etched on the bottom surface of the second layer (120).

The branching structure (150) is a structure that connects a waveguide (160) and a plurality of radiation slots (140), and may be formed as a structure that branches to connect a waveguide (160) and a plurality of radiation slots (140). The plurality of radiation slots may comprise a first to fourth radiation slots (141 to 144), in which case it may be configured as a 1-4 branching structure. It may be configured in various forms of branching structures, such as 1-2 or 1-3, depending on the number of radiation slots (140).

The branching structure (150) may include a first horn structure (152) and a second horn structure (151). A first horn structure (152) may be formed in a position corresponding to the center of four radiation slots (141 to 144) so that it can be connected to the waveguide, and a second horn structure (151) has a lower portion connected to the first horn structure (152) and an upper portion connected to four radiating slots (141 to 144).

The first horn structure (152) may be connected to a single waveguide, and the second horn structure (151) may be connected to four radiation slots (141 to 144) and connected to each other to form a 1-4 branching structure.

The first horn structure (152) may be formed as a horn structure with a cross-sectional area of the other end connected to the second horn structure (151) wider than the cross-sectional area of the first end connected to the waveguide (160). The second horn structure (151) may also be formed as a horn structure with a cross-sectional area at the other end connected to multiple radiation slots (140) larger than the cross-sectional area at the end connected to the first horn structure (152). The second horn structure has a larger cross-sectional area than the first horn structure (152), and the first horn structure (152) and the second horn structure (151) may be connected in a T-junction.

The central axis of the first horn structure (152) may overlap with a wall (145) between two of the four radiation slots (142, 143). The central axis of the first horn structure (152) may be formed so that it overlaps with the wall, and the signal applied through the waveguide (160) can be guided to move in the direction of the plurality of radiation slots (140) by moving to the path formed on both sides through the wall. If the central axis of the first horn structure (152) overlaps with one of the radiation slots, the signal applied through the waveguide (160) may be concentrated in the corresponding radiation slot, so the central axis of the first horn structure (152) can be formed to overlap with the wall so that the signal can be evenly branched into multiple radiation slots (140).

The wall (145) between the two radiation slots that overlap with the central axis of the first horn structure (152) may extend to form part of the second horn structure (151) region. When four radiation slots (141 to 144) are arranged in a row, the signal may be transmitted to the outer radiation slots (141, 144) to a lesser extent than to the central radiation slots (142, 143). For efficient and uniform signal emission, the wall (145) between the two radiation slots that overlap with the central axis of the first horn structure (152) may be formed by extending in the direction of the second layer (120) more than the wall between the other radiation slots. In other words, the wall (145) may be formed by extending to a part of the second horn structure (151) area. The walls between the two radial slots that overlap with the central axis of the first horn structure (152) other than the wall (145) between the radiation slots may extend only to the boundary between the first layer (110) and the second layer (120). Alternatively, it may be formed shorter than the boundary between the first layer (110) and the second layer (120) and inside the first layer (110). In other words, a 1-4 branching structure may be implemented as a single 1-4 branching structure in which a primary branch is formed in the wall (145) between two radiation slots that overlap with the central axis of the first horn structure (152), and a secondary branch is formed in the wall between another radiation slot. The 1-4 branching structure can be used to distribute signals radiated to the outside or synthesize signals authorized from the outside.

The antenna according to the comparative example of the present invention is formed as a 1-2 branching structure (17) and a 2-4 branching structure (16) as shown in FIG. 3, and is composed of four layers (11 to 14) to form each branching structure. The signal authorized in the waveguide (17) is first branched by the 1-2 branching structure (17) formed between the third layer (13) and the second layer (12), and each branched signal is then secondly branched by the 2-4 branching structure (16) formed between the second layer (12) and the first layer (11) to be authorized into the four radiation slots (15). Since the 1-2 branching structure (17) and the 2-4 branching structure (16) form a double-branching structure and must be formed on different layers, four layers are required, which causes performance deterioration of the tolerance for each layer and makes the manufacturing process more complicated and costly.

The antenna according to one embodiment of the present invention can be constructed with only three layers by connecting the waveguide (160) and four radiation slots (140) through a 1-4 branching structure (150), and the two layers with a double branching structure can be integrated into one layer to transmit with a uniform electric field distribution. This reduces the number of layers that make up the entire antenna, thereby reducing production costs and reducing the performance degradation of the tolerances generated in each layer.

On the third floor (130), a waveguide (160) and signal input/output part (170) are formed. A lower region (162) of the waveguide (160) corresponding to the upper region (161) of the waveguide (160) formed on the second floor (120) can be formed on the upper portion of the third floor (130). The lower region (162) of the waveguide (160) can be formed in an etched shape on the upper surface of the third layer (130) in the shape of a waveguide (160) cross-section divided in half. When the second layer (120) and the third layer (130) are combined, the upper region (161) and the lower region (162) of the waveguide (160) form the upper and lower surfaces of the waveguide (160), thereby forming a single waveguide (160).

A signal input/output part (170) connected to a waveguide (160) may be formed in the lower portion of the third layer (130). The signal input/output part (170) can receive signals radiated to the outside through the waveguide (160), the branching structure (150), and the radiation slot (140), or it can output signals from the outside that are applied to the radiation slot (140), the branching structure (150), and the waveguide (160). A communication module that transmits and receives signals can be connected to the signal input/output part (170), and the signal input/output part (170) can be referred to as a feed. The lower surface of the third layer (130) may be connected to an RF module. The RF module may include a PCB with an RFIC chip mounted on it or an RF input/output port of the RFIC chip. The RF input/output port may be connected to the signal input/output part (170). Here, the RF module may be a module used in a 4D image radar for vehicles, and the RFIC chip may be a MIMO FMCW transceiver with a bandwidth of 76 to 81 GHz. Here, the MIMO (Multi Input Multi Output) FMCW (Frequency-Modulated Continuous-Wave) RFIC chip uses a linear frequency modulation method in which the frequency increases over time, and the distance and relative speed between the radar and the target can be estimated using the time delay between the transmitted and received signals and the Doppler frequency shift. The angle of the target can be estimated through the phase difference caused by the antenna spacing in the MIMO antenna.

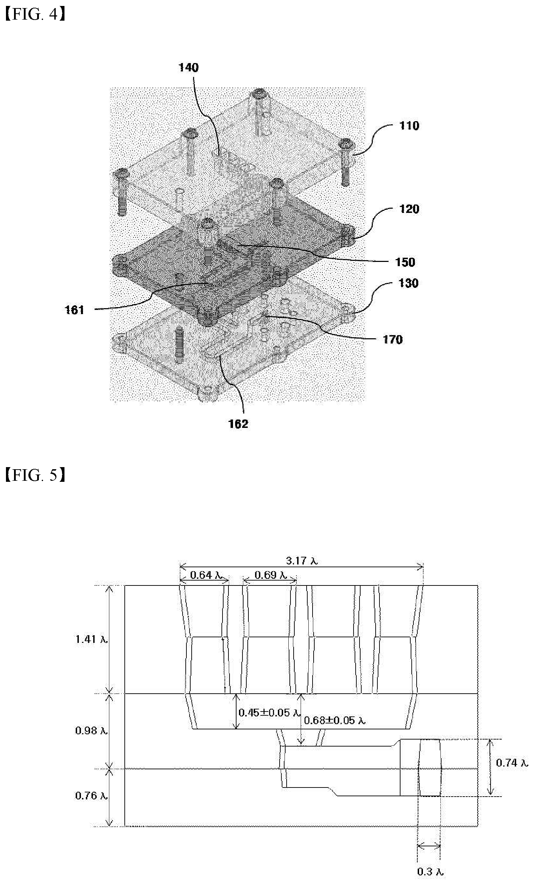

The first layer (110) to the third layer (130) may be connected through the coupling groove and coupling part as shown in FIG. 4. A signal input/output part (170) is formed in the lower portion of the third layer (130), and the lower portion of the waveguide (162) connected to the signal input/output part (170) and formed in the upper portion of the third layer (130) and the upper portion of the waveguide (161) formed in the lower portion of the second layer (120) can form a waveguide when the second layer (120) and the third layer (130) are combined. At this time, the waveguide (160) can form a path to the radiation slot (140) to secure the length according to the wavelength of the signal. The waveguide (160) may include a normal path, an intersecting (cross) path intersecting with another waveguide (160), and a transition path connecting the normal path and the intersecting path. A branching structure (150) may be formed on the upper portion of the second layer (120) to connect the waveguide (160) and the radiation slot (140), and the horn-shaped radiation slot (140) may be connected to the waveguide (160) through the branching structure (150), allowing the signal to be radiated to the outside or to receive a signal from the outside.

Each configuration of the antenna according to one embodiment of the present invention can be set in terms of length, area, or shape according to the wavelength of the signal. For example, as shown in FIG. 5, the values of each component can be set.

The first layer (110) may be thicker than the second layer (120), and the second layer (120) may be thicker than the first layer (110). For example, the thickness of the first layer (110) may be 1 to 2 times the signal wavelength (λ), the thickness of the second layer (120) may be 0.8 to 1.1 times the signal wavelength, and the thickness of the third layer (130) may be 0.5 to 0.9 times the signal wavelength. Alternatively, the thickness of the first layer (110) may be 1.14 times the signal wavelength (λ), the thickness of the second layer (120) may be 0.98 times the signal wavelength, and the thickness of the third layer (130) may be 0.76 times the signal wavelength.

The height of the first horn structure (152) may be lower than the height of the second horn structure. For example, the sum of the height of the first horn structure (152) and the height of the second horn structure (151) may be 0.5 to 1 times the signal wavelength, and the height of the second horn structure (151) may be 0.3 to 0.6 times the signal wavelength. Alternatively, the sum of the height of the first horn structure (152) and the height of the second horn structure (151) may be 0.68 ± 0.05 times the signal wavelength, and the height of the second horn structure (151) may be 0.45 ± 0.05 times the signal wavelength.

The four radiation slots (141 to 144) may be arranged in a row, and the total length of the four radiation slots (140) can be 2.5 to 4 times the signal wavelength. It can also be 3.17 times.

The width of the two radiation slots (142, 143) disposed in the center of the four radiation slots (141 to 144) may be longer than the width of the two radiation slots (141, 144) disposed at the periphery. For example, the width of the two slots (142, 143) disposed in the center may be 1.01 to 1.2 times the width of the two slots (141, 144) disposed on the periphery. The width of the two slots (142, 143) disposed in the center may be 0.5 to 0.8 times the signal wavelength, and the width of the two slots (141, 144) disposed at the periphery may be 0.45 to 0.75 times the signal wavelength. Alternatively, the width of the two slots (142,143) disposed in the center may be 0.69 times the signal wavelength, and the width of the two slots (141,144) disposed at the periphery may be 0.64 times the signal wavelength.

The height of the waveguide (160) may be 0.4 to 0.8 times the signal wavelength, and a region in contact with the signal input/output part (170) may be 0.6 to 0.9 times the height and 0.2 to 0.4 times the width. Alternatively, a region in contact with the signal input/output part (170) may be 0.74 times the height and 0.3 times the width.

As shown above, the signal radiated through an antenna connecting a waveguide and a radiation slot through a branching structure can be applied to a waveguide (160) as shown in FIG.6, and branched at a 1-4 branching structure (150) and distributed to each radiation slot (141 to 144) for radiating, or an external signal can be applied to a radiation slot (140), synthesized at a 1-4 branching structure (150), and applied to a waveguide (160).

The length of each configuration is set according to the wavelength of the signal, and the wall (145) between the two radiation slots that overlap with the central axis of the first horn structure (152) can be extended to form part of the second horn structure (151) region, thereby achieving a uniform electric field distribution across the branching structure and radiation slots, as shown in FIG. 7. At this time, the walls between the two radiation slots that overlap with the central axis of the first horn structure (152) other than the wall (145) between the two radiation slots may be formed shorter inside the first layer (110) than the boundary between the first layer (110) and the second layer (120). In other words, a secondary branching structure having a 1-4 branching structure may be implemented as a single 1-4 branching structure in which the first branching is performed at the wall (145) between the two radiation slots that overlap with the central axis of the first horn structure (152) and the second branching is performed at the wall between the other radiation slots. The 1-4 branching structure allows for the uniform distribution of signals radiated to the outside.

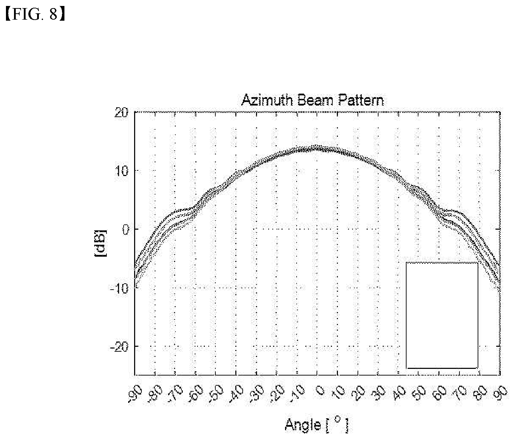

As shown in FIG. 3, it can be confirmed that the same performance can be secured even if the number of layers is reduced from four to three, as shown in FIGS. 8 to 10, compared to an antenna that includes a double-branched structure.

As mentioned above, by connecting the waveguide and the radiation slots through a single branching structure, two layers with a double-branched structure can be integrated into one layer to transmit a uniform electric field distribution. This reduces the number of layers that make up the entire antenna, thereby reducing production costs and reducing the performance degradation of the tolerances generated in each layer. In addition, it can be applied to a multi-array antenna by applying the waveguide transmission optimal structure technology.

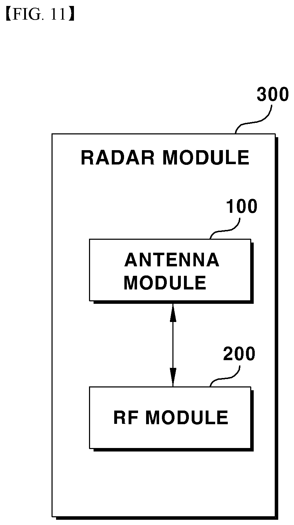

FIG. 11 is a block diagram of the radar module according to one embodiment of the present invention.

The radar module (300) according to one embodiment of the present invention may include an RF module (200) and an antenna module (100). A detailed description of each configuration of the radar module according to one embodiment of the present invention corresponds to the detailed description of the antenna in FIGS. 1 to 10, and the following redundant descriptions will be briefly explained.

The RF module (200) generates and transmits and receives RF signals, and the antenna module (100) is connected to the input and output parts of the RF module to radiate RF signals.

The antenna module (100) may include: a second layer formed with a branching structure on the upper portion formed with a plurality of radiation slots that connect the plurality of radiation slots with the waveguide, and formed at a lower portion with the upper region of the waveguide; and a third layer formed on the upper portion with a lower region of the waveguide corresponding to the upper portion of the waveguide, and formed at a lower portion with an input/output part connected to the waveguide.

The plurality of radiation slots may include four radiation slots, and the branching structure may include a 1-4 branching structure, the branching structure may include: a first horn structure connected to the waveguide formed at a position corresponding to the center of the four radiation slots; and a second horn structure connected to the lower portion of the first horn structure and at an upper portion to the four slots.

The four radiation slots may be formed at a distance (spaced apart) from each other, and the central axis of the first horn structure may overlap with the wall between two of the four radiation slots, and the wall between the two radiation slots that overlap with the central axis of the first horn structure can extend to form part of the second horn structure area.

The four radiation slots may be formed in a row, the width of the two slots located in the center of the four radiation slots may be longer than the width of the two slots located at the periphery, the first layer may be thicker than the second layer, and the second layer may be thicker than the third layer.

The sum of the height of the first horn structure and the height of the second horn structure may be 0.63 to 0.73 times the signal wavelength, and the height of the second horn structure may be 0.4 to 0.5 times the signal wavelength. The width of the two slots located in the center may be 0.69 times the signal wavelength, the width of the two slots located in the outer rim may be 0.64 times the signal wavelength, the thickness of the first layer may be 1.14 times the signal wavelength, the thickness of the second layer may be 0.98 times the signal wavelength, and the thickness of the third layer may be 0.76 times the signal wavelength.

The waveguide (160) may include a plurality of waveguides, and may include a first waveguide (132) and a second waveguide (134). The first waveguide (132) may be connected to at least some of the plurality of radiation slots, and the second waveguide (134) may be connected to at least some of the plurality of radiation slots that are connected to the first waveguide (132) and to some other. The first waveguide (132) and the second waveguide (134) may be spaced apart from each other. The first waveguide (132) and the second waveguide (134) may be formed on different layers when they intersect in the first direction in the path leading to each radiation slot. Here, the first direction may be the stacking direction of multiple layers of the antenna or the radiation direction of the radiation slots.

At least one of the first waveguide (132) or the second waveguide (134) may include a transition path that bypasses a layer formed by another waveguide and another layer in an area where they intersect.

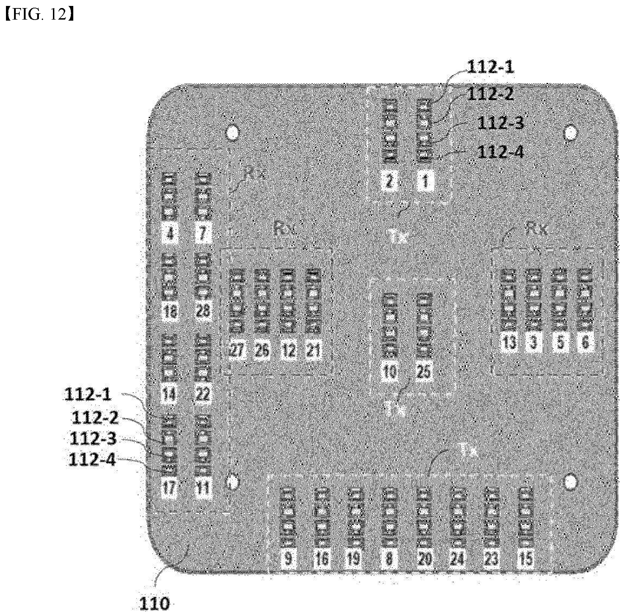

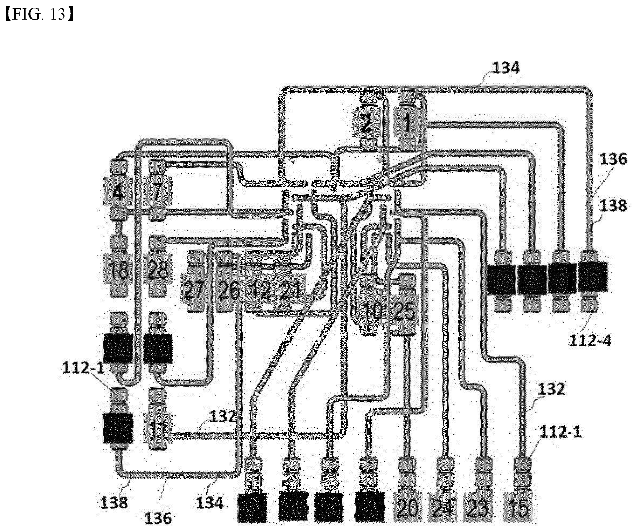

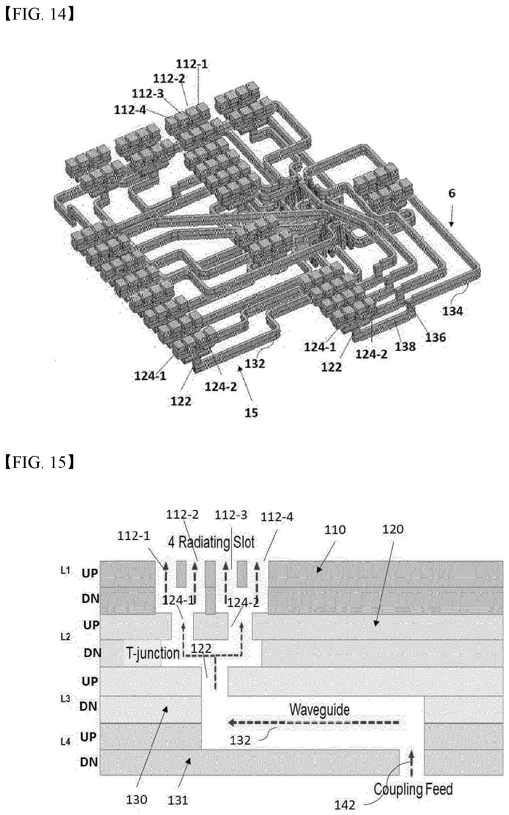

FIG. 12 is a layout diagram of an antenna according to a second embodiment of the present invention, and FIGS. 13 and 14 are schematic drawings of the antenna according to a second embodiment of the present invention, and FIG. 15 is a schematic diagram of a side section of the antenna according to a second embodiment of the present invention.

The antenna of the waveguide overlap avoidance structure according to the second embodiment of the present invention consists of a first waveguide and a second waveguide. Here, the first waveguide may be a normal path waveguide, and the second waveguide may be a cross path waveguide that intersects the first waveguide, which is a normal path waveguide. Hereafter, the first waveguide will be described based on the assumption that it is a normal path waveguide, and the second waveguide will be described based on the assumption that it is a cross path waveguide.

The antenna of the waveguide overlap avoidance structure according to the second embodiment of the present invention may be a waveguide-fed radar antenna for vehicles, and may be various other antennas using waveguides. First, the antenna according to the second embodiment of the present invention is a vehicle radar antenna, which consists of 12 transmitting antennas and 16 receiving antennas, and each transmitting/receiving antenna is a horn antenna consisting of four array horn radiators, and the RFIC chip and each horn radiator are connected via a waveguide. This structure is just one example, and explained as such hereinafter, and it can be modified in various ways depending on the type and performance of the RFIC chip, module size, target performance, application, etc.

The waveguide-fed radar antenna (100) for vehicles according to the second embodiment of the present invention consists of 12 transmitting (Tx) antennas and 16 receiving (Rx) antennas as shown in Table 1 below, and the total of 28 antennas are divided into 17 antennas with waveguides consisting of normal paths and 11 antennas with waveguides consisting of cross paths. Also, as shown in FIG. 12, the transmitting antenna and the receiving antenna are the same shape and are an array horn antenna with four radiation (radiating) slots (112-1 to 112-4) arranged in a row. In the second embodiment of the present invention, an antenna with four radiation slots (112-1 to 112-4) arranged in a row is given as an example, but depending on the required target performance, the arrangement of the radiation slots can be arranged in various forms, such as 4 x 4.

**[Table 1]**

| Antenna number(n) | Transmission /reception classified | Path classified | Antenna number(n) | Transmission /reception classified | Path classified |
|---|---|---|---|---|---|
| 1 | transmission | normal | 15 | transmission | normal |
| 2 | transmission | normal | 16 | transmission | cross |
| 3 | reception | cross | 17 | reception | cross |
| 4 | reception | normal | 18 | reception | normal |
| 5 | reception | cross | 19 | transmission | cross |
| 6 | reception | cross | 20 | transmission | normal |
| 7 | reception | normal | 21 | reception | normal |
| 8 | transmission | cross | 22 | reception | cross |
| 9 | transmission | cross | 23 | transmission | normal |
| 10 | transmission | normal | 24 | transmission | normal |
| 11 | reception | normal | 25 | transmission | normal |
| 12 | reception | normal | 26 | reception | normal |
| 13 | reception | cross | 27 | reception | normal |
| 14 | reception | cross | 28 | reception | normal |

According to Table 1 and FIG. 12 above, the first antenna (the antenna of antenna number 1, hereinafter referred to as nth antenna ) is a transmission antenna with a waveguide consisting of a normal path, which is arranged in parallel with the second antenna (2) on the upper side of the radiation layer (110) plane, and the 17th antenna (17) is a receiving antenna with a waveguide consisting of an cross path, which is arranged in the lower left side of the radiation layer (110) plane.

In addition, according to Table 1 above, there are a total of eight transmission antennas with a normal path, namely, antennas 1, 2, 10, 15, 20, 23, 24, and 25, and a total of four transmission antennas with a cross path, namely, antennas 8, 9, 16, and 19. There are a total of nine receiving antennas with a normal path, namely, antennas 4, 7, 11, 12, 18, 21, 26, 27, and 28, and a total of seven receiving antennas with a cross path, namely, antennas 3, 5, 6, 13, 14, 17, and 22.

Referring to FIGS. 1 to 14, the transmission antenna (1, 2, 10, 15, 20, 23, 24, 25) and receiving antenna (4, 7, 11, 12, 18, 21, 26, 27, 28) having a normal path are composed of a first waveguide (132) placed at a lower position than the second waveguide (134), a first stage T junction (122), a second stage T junction (124-1, 124-2), and four radiation slots (112-1 to 112-4).

In addition, the transmission antenna (8, 9, 16, 1) and the receiving antenna (3, 5, 6, 13, 14, 17, 22) with cross paths may include a seond waveguide (134) placed higher than the first waveguide (132) to avoid overlapping with the first waveguide (132), a fourth waveguide (136) for lowering the height of the second waveguide (134) to connect the second waveguide (134) to the 2-stage T junction (122, 124-1, 124-2), a third waveguide (138) disposed at the same height as that of the first waveguide (132), a first stage T junction (122), a second stage T junction (124-1,124-2), and four radiation slots (112-1~112-4).

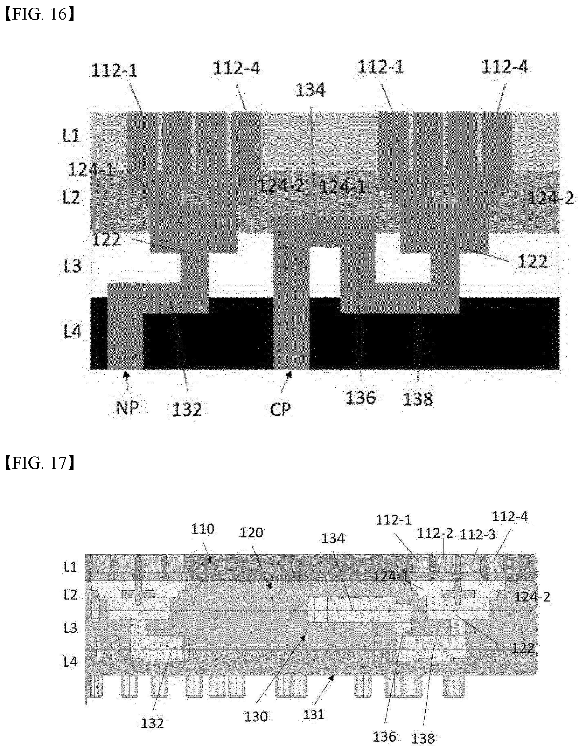

Meanwhile, each antenna (1-28) according to the second embodiment of the present invention has a first layer (L1) with four radiation (radiating) slots (112-1-112-4) as shown in FIG. 15, a second layer (L2) for distributing one RF signal to two-stage T-junction, and a third layer (L3) for propagating the RF signal through the first waveguide (132) or the second waveguide (134 of FIG. 16), and a fourth layer (L4) for coupling feed.

In practice, due to manufacturing process (mold, etc.) reasons, antenna components such as waveguides, T junctions, and radiation slots are formed between adjacent layers, making it difficult to uniformly define the function of each layer. However, for the convenience of understanding, in the second embodiment of the present invention, the first layer (L1) is called the radiation layer (110), the second layer (L2) is called the distribution/synthesis layer (120), the third layer (L3) is called the propagation layer (130), and the fourth layer (L4) is called the feed layer (131).

The radiation layer (110) includes four radiation slots (112-1 to 112-4), and the distribution/synthesis layer (120) includes one first-stage T junction (122) and two second-stage T junctions (124-1, 124-2), which distribute a single RF transmission signal evenly into four RF transmission signals when transmitting, and synthesize four RF reception signals into a single RF reception signal when receiving. The propagation layer (130) includes the first waveguide (132) of the normal path (NP), the second waveguide (134) of the cross path (CP), the fourth waveguide (136) for height transition, and the third waveguide (138) to propagate the RF signal. In the feed layer (131), a coupling feed tube (142) is formed to transmit the RFIC chip's transmit port signal to the waveguide (132, 134) or to transmit the reception signal of waveguide (132, 134) to RFIC chip's receiving port.

As shown in FIG. 15, each of the four layers (L1 to L4) is divided into an upper region (UP) and a lower region (DN), and the first waveguide (132) of the normal path is formed in part of the upper region (UP) of the fourth layer (L4) and in part of the lower region (DN) of the third layer (L3). The first stage T junction (122) is formed in part of the upper region (UP) of the third floor (L3) and in part of the lower region (DN) of the second floor (L2), and the second stage T junction (124-1, 124-2) is formed in part of the upper region (UP) of the second floor (L2) and in part of the lower region (DN) of the first floor (L1), and the radiation slots (112-1 to 112-4) are formed in part of the upper region (UP) of the first floor (L1).

In addition, the outer side of the fourth floor (L4) can be connected to an RFIC chip mounted PCB or to an RF input/output port of the RFIC chip. Typically, the RFIC chip used in automotive 4D image radars is a MIMO FMCW transceiver with a bandwidth of 76 to 81 GHz and a bandwidth of 5 GHz. Here, the MIMO (Multi Input Multi Output) FMCW (Frequency-Modulated Continuous-Wave) RFIC chip uses a linear frequency modulation method in which the frequency increases over time, and the distance and relative velocity between the radar and the target can be estimated using the time delay between the transmitted and received signals and the Doppler frequency shift. The angle of the target can be estimated through the phase difference caused by the antenna spacing in the MIMO antenna.

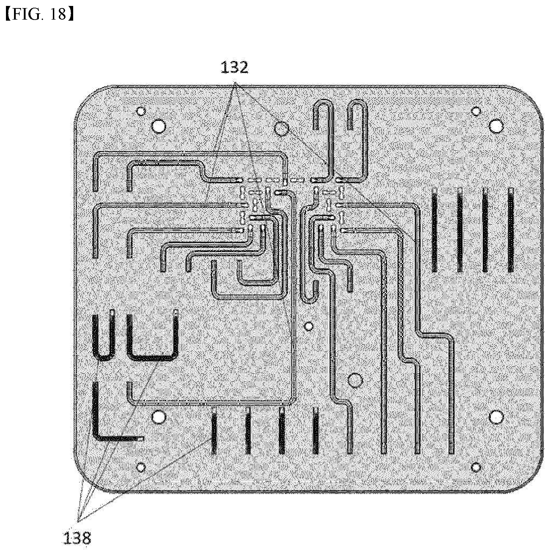

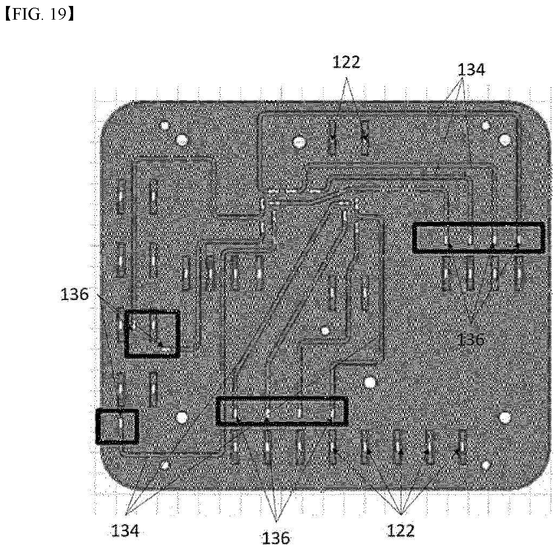

FIGS. 16 and 17 are schematic diagrams showing the normal path and the cross path of the waveguide in the antenna according to the second embodiment of the present invention, and FIG. 18 is a top view showing the normal path waveguide layer in the antenna according to the second embodiment of the present invention, and FIG. 19 is a top view showing the cross path waveguide layer in the antenna according to the second embodiment of the present invention.

The waveguide of the antenna according to the second embodiment of the present invention may include a first waveguide (132) of the normal path (NP), a second waveguide (134) of the cross path (CP), a fourth waveguide (136) for transitioning the cross path (CP) to the normal path (NP), and a third waveguide (138) of the normal path (NP), as shown in FIGS. 16 to 19.

Referring to FIGS. 16 to 19, the first waveguide (132) of the normal path (NP) is formed by forming a cavity in a portion of the upper side of the fourth layer (L4) and a portion of the lower side of the third layer (L3), and the second waveguide (134) of the cross path is formed by forming a cavity in a portion of the upper side of the third layer (L3) and a portion of the lower side of the second layer (L2).

In addition, the position of the second waveguide (134) in the four-layer structure antenna (between the second and third layers) is the same as the position where the first stage T junction (122) is installed (between the second and third layers), so the second waveguide (134) cannot be directly connected to the first stage T junction (122). Therefore, in order to connect the second waveguide (134) of the cross path (CP) to the first stage T junction (122), it must be connected through the third waveguide (138) after changing the height through the fourth waveguide (136).

Therefore, an antenna with a cross path requires an additional transition part that transitions from the cross path to the normal path. This transition part consists of, from the end of the second waveguide (134), the fourth waveguide (136), the third waveguide (138), and the first stage T junction (122), and the characteristics of the antenna with a cross path are greatly affected by this transition part.

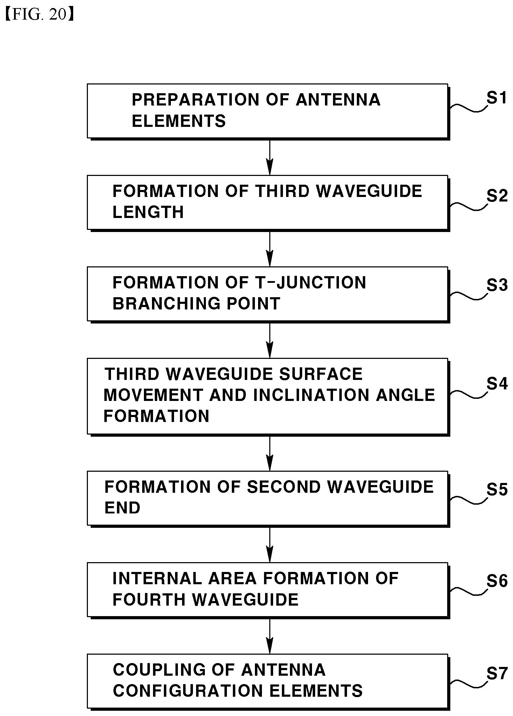

FIG. 20 is a flow chart showing an antenna manufacturing method with a waveguide overlap avoidance structure according to the second embodiment of the present invention.

The antenna manufacturing method according to the second embodiment of the present invention, as shown in FIG. 20, may comprise: a step (S1) of preparing antenna components (first to fourth waveguides, T junctions, radiators, etc.), a step (S2) of forming the length of the third waveguide (138), a step (S3) of forming a branching point of the T junction (122), a step (S4) of forming a surface movement and an angle of inclination of the third waveguide (138), a step (S5) of forming an end of the second waveguide (134), a step (S6) of forming an internal area of the fourth waveguide (136), and a step (S6) of combining the fitted antenna components.

As explained earlier, an antenna with a cross path for waveguide overlap avoidance needs to have an additional transition part, and the shape of the components that make up this transition part greatly affects the target performance of the antenna.

In the antenna manufacturing method according to the second embodiment of the present invention, the process (S2) of forming the length of the third waveguide (138) in the transition part is referred to as the first optimization process, and the process (S3~S6) of forming (fitting) the shape of each element of the transition part is referred to as the second optimization process. After dividing the two optimization processes, the contents of each optimization process and the changes in antenna characteristics after the optimization process are examined in detail.

### < First Optimization Process>

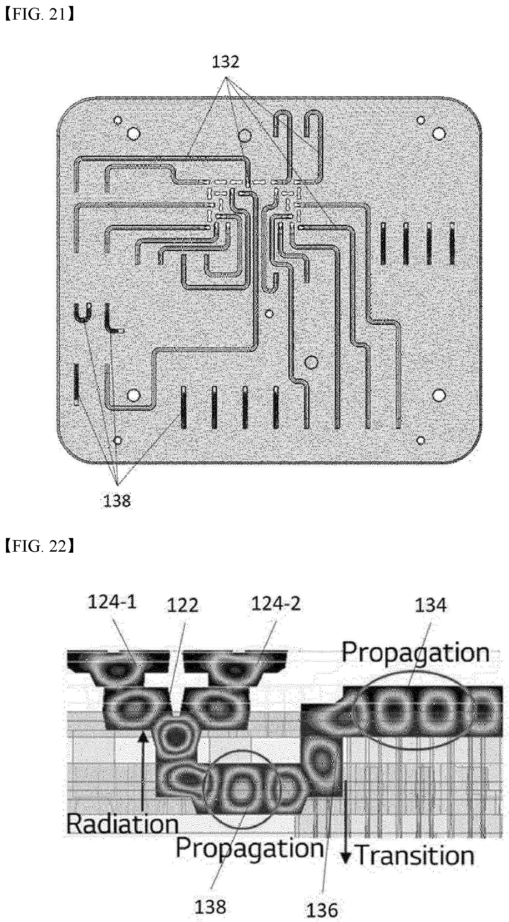

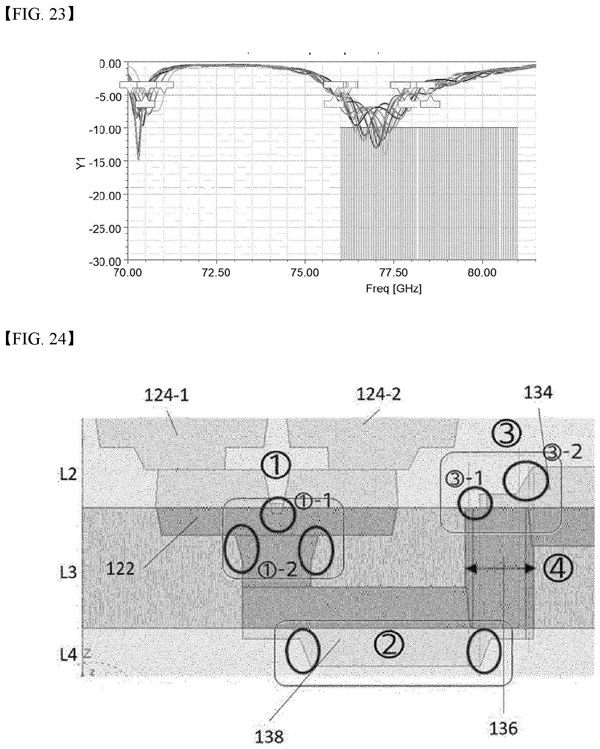

FIG. 21 is a drawing for explaining the first optimization process of the antenna manufacturing method according to the second embodiment of the present invention, and FIG. 22 is a drawing showing the electric field distribution of the waveguide after the first optimization of the antenna manufacturing method according to the second embodiment of the present invention, and FIG. 23 is a graph showing the return loss measured at each port after the first optimization of the antenna manufacturing method according to the second embodiment of the present invention.

The first optimization process of the antenna according to the second embodiment of the present invention improves the performance of the antenna by changing the length of the third waveguide (138) as shown in FIG. 18 to the following Table 2. An example of a third waveguide (138) applied with the first optimization is shown in FIG. 21.

**[Table 2]**

| Antenna number (n) | Third waveguide path length (unit: mm) | |
|---|---|---|
| | Example of FIG.7 | First optimization applied |
| 13 | 18 | 9.35 |
| 3 | 18 | 9.35 |
| 5 | 18 | 9.35 |
| 6 | 18 | 9.35 |
| 9 | 9.35 | 9.35 |
| 16 | 9.35 | 9.35 |
| 19 | 9.35 | 9.35 |
| 8 | 9.35 | 9.35 |
| 14 | 22.61 | 9.35 |
| 17 | 22.35 | 9.35 |
| 22 | 29.51 | 9.35 |

Referring to Table 2 above, it can be noted that the lengths of the third waveguide (138) of the antennas No. 13, 3, 5, and 6 were changed from 18 mm to 9.35 mm, the lengths of the third waveguide (138) of the antennas No. 9, 16, 19, and 8 were changed from 9.35 mm to 9.35 mm, and the length of the third waveguide (138) of the antenna No. 14 was changed from 22.61mm to 9.35-mm, the 17th antenna changed the length of the third waveguide (138) from 22.35-mm to 9.35-mm, and the 22nd antenna changed the length of the third waveguide (138) from 29.51-mm to 9.35-mm.

As shown in FIG. 21, the third waveguide (138) applied with the first optimization applied has the same path length of 9.35 mm, and the performance of the antenna with the cross path can be improved by eliminating the phase difference by making the electrical length phase identical.

After applying the first optimization, the electric field distribution in the transition part was improved to some extent, as shown in FIG. 22, and the return loss at all ports after applying the first optimization is shown in FIG. 23, which shows that the resonance points are clustered. In FIG. 23, the horizontal axis represents the frequency (unit: GHz), and the vertical axis represents the level of return loss (unit: dB). According to the return loss graph in FIG. 23, the return loss was spread near the resonance point in the cross path of the structure in FIG. 18, but by applying the first optimization to eliminate the phase difference, it can be seen that some frequency bands satisfy the target performance.

### < Second Optimization Process>

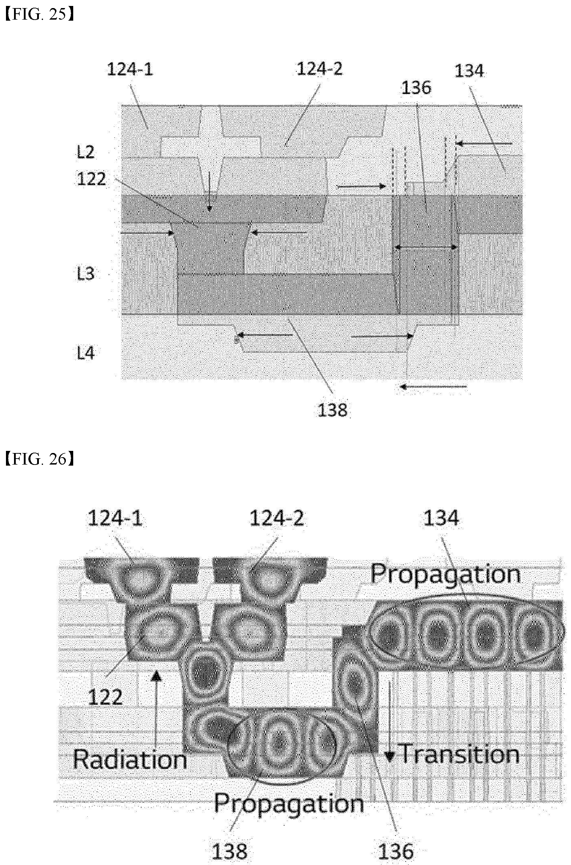

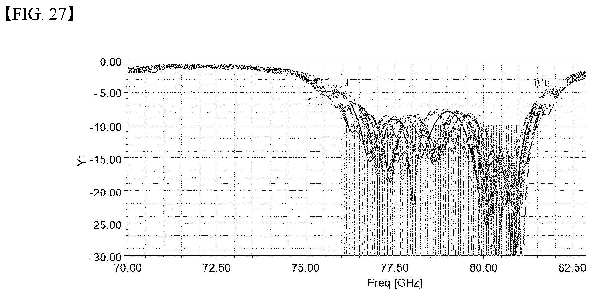

FIGS. 24 and 25 are drawings for explaining the second optimization process of the antenna manufacturing method according to the second embodiment of the present invention, and FIG. 26 is a drawing showing the electric field distribution of the waveguide after the second optimization of the antenna manufacturing method according to the second embodiment of the present invention, and FIG. 27 is a graph showing the return loss measured at each port after the second optimization of the antenna manufacturing method according to the second embodiment of the present invention.

The second optimization process of the antenna manufacturing method according to the second embodiment of the present invention is a slight modification of the shape of each component of the transition part, as shown in FIGS. 24 and 25. In FIGS. 24 and 25, ① indicates the application of the second optimization in the first stage T junction region, ② indicates the application of the second optimization in the third waveguide (138) region, ③ indicates the application of the second optimization in the boundary region between the second waveguide (134) and the fourth waveguide (136), and ④ indicates the application of the second optimization in the fourth waveguide (136) region.

More specifically, in the ① area, the height of the branch point of the first stage T junction (122) is adjusted (①-1), and the branch point width and angle are adjusted to 5 to 35° (①-2) to form an inclined part at the top of the vertically positioned input end, and a wedge-shaped depression part is formed in the center of the horizontal branch end. This enables uniform E-field distribution during radiation, thereby improving gain and beam performance. In the second embodiment of the present invention, as shown in FIG. 25, the height of the branch point of the depression part is lowered by 0.39λ, and the width of the branch point at the upper end of the input side is moved by 0.257λ on both sides to form an inclined part with an angle of 30°. Here, λ represents the wavelength of the RF transmit/receive signal (operating frequency).

In addition, in the ② region, the two ends of the lower surface of the third waveguide (138) are moved to form a predetermined length of the inlet surface, and an inclined part is formed so that the angle is 5 to 35°. This allows for the formation of a uniform field mode in the transition-propagation section and a uniform field mode in the operating frequency section. In the second embodiment of the present invention, as shown in FIG. 25, the width of the lower side of the third waveguide (138) is shifted by 0.257λ on both sides to form an inclination part with an angle of 30°.

In addition, in the ③ region, the junction of the second waveguide (134) connected to the fourth waveguide (136) was staircasedly formed in two steps, and then the lower staircase surface was moved to the cross path side, and the higher staircase surface was moved and an inclined surface with an angle of 5 to 35° was formed. This allows the formation of a field branch in the propagation-transition region and a uniform field mode in the operating frequency region. In the second embodiment of the present invention, as shown in FIG. 25, the low staircase surface was surface-moved by 0.128λ to the cross path side at the junction of the second waveguide (134) connected to the fourth waveguide (136), and the high staircase surface was surface-moved by 0.257λ on both sides to form an inclined surface with an angle of 30°.

In addition, in the ④ region, the physical size of the waveguide is adjusted to form (determine) the frequency bandwidth according to the physical size of the waveguide. In the second embodiment of the present invention, as shown in FIG. 25, the internal width of the fourth waveguide (136) is adjusted by 0.603 λ to form an internal area.

In this way, the second optimization process fine-tuned each component of the transition part, and the field (E-field) distribution of the transition part after the second optimization is shown in FIG. 26. It can be seen that the transmission characteristics have been improved by forming the TE10 mode with uniform field characteristics in all sections. As shown in FIG. 27, the return loss at all ports after applying the second optimization is within the target performance in the operating frequency range (76-81 GHz). In FIG. 27, the horizontal axis represents the frequency (unit: GHz), and the vertical axis represents the level of return loss (unit: dB). According to the return loss graph in FIG. 27, after applying the second optimization, the return loss in the 76 GHz to 81 GHz band is below -5 dB, satisfying the target performance, and the bandwidth of the antenna with the cross path is improved, resulting in a significant improvement in the transmission characteristics in the operating frequency band.

As such, the operation of the antenna manufactured according to the second embodiment of the present invention is divided into transmission and reception and by path, and is explained as follows.

### <Transmission antenna with a normal path>

Each transmission antenna (1,2,10,15,20,23,24,25) with a normal path receives an RF transmission signal from the transmission port of the RFIC chip through the coupling feed tube (142) on the fourth layer (L4) and transmits it to the first stage T junction (122) of the distribution/synthesis layer (120) through the first waveguide (132) formed between the fourth layer and the third layer. The first stage T junction (122) equally distributes one RF transmission signal into two RF transmission signals. The RF signal distributed at the first stage T junction (122) is again distributed into two RF transmission signals by the second stage T junction (124-1, 124-2), and then a total of four distributed RF transmission signals are radiated into the air through four radiation slots (112-1 to 112-4).

### < Transmission antenna with a cross path>

Each transmission antenna (8, 9, 16, 19) with a cross path receives an RF transmission signal from the transmission port of the RFIC chip through the coupling feed tube (142) on the fourth layer (L4) and propagates it to the second waveguide (134) formed between the third and second layers. After avoiding overlap with the first waveguide (132) by the second waveguide (134), the output signal of the second waveguide (134) is transmitted to the first stage T junction (122) of the distribution/synthesis layer (120) via the fourth waveguide (136) and the third waveguide (138). In other words, in the case of the second waveguide (134), as explained above, it cannot be directly connected to the first stage T junction (122) at the same location, so it first passes through the third waveguide (138) formed between the fourth layer and the third layer, and then transmits the RF transmission signal to the first stage T junction (122) in the same way as the other first waveguide (132).

The first stage T junction (122) evenly distributes a single RF transmission signal into two RF transmission signals, and the RF transmission signals distributed by the first stage T junction (122) are again distributed into two RF transmission signals by the second stage T junction (124-1, 124-2), and a total of four distributed RF transmission signals are radiated into the air through four radiation slots (112-1 to 112-4).

### <Receiving antenna with a normal path>

Each receiving antenna (4,7,11,12,18,21,26,27,28) with a normal path receives the RF received signal (the RF transmitted signal emitted from the transmission antenna reflected from the target) from the air through four radiation slots (112-1 to 112-4) formed on the first layer (L1), and the RF received signal received through the four radiation slots (112-1 to 112-4) is synthesized into one RF received signal by two second-stage T junctions (124-1,124-2) respectively. The two RF reception signals synthesized by the second stage T junction (124-1, 124-2) are synthesized into one RF reception signal by the first stage T junction (122). The RF reception signal synthesized by the first stage T junction (122) is transmitted to the reception port of the RFIC chip through the first waveguide (132) formed between the fourth layer and the third layer. Accordingly, the RFIC chip can process the RF reception signal received through the receiving port.

### < Receiving antenna with a cross path>

Each receiving antenna (3, 5, 6, 13, 14, 17, 22) with a cross path receives the RF received signal reflected from the target from the air through the four radiation slots (112-1 to 112-4) formed on the first layer (L1), and the signals received through the four radiation slots (112-1 to 112-4) are synthesized into one RF received signal by each of the two second-stage T junctions (124-1, 124-2). The two RF received signals synthesized by the second stage T junction (124-1, 124-2) are synthesized into one RF received signal by the first stage T junction (122). The RF reception signal synthesized by the first stage T junction (122) is transmitted to the second waveguide (134) formed between the third layer and the second layer via the third waveguide (138) formed between the fourth layer and the third layer and the fourth waveguide (136) formed between the third layer and the second layer.

And after avoiding overlap with the first waveguide (132) by the second waveguide (134), the RF signal from the second waveguide (134) is transmitted to the receiving port of the RFIC chip. Accordingly, the RFIC chip can process the RF signal received through the receiving port.

The features, structures, effects, etc. described in the embodiments above are included in at least one embodiment and are not necessarily limited to only one embodiment. Furthermore, the features, structures, and effects illustrated in each embodiment may be combined or modified with respect to other embodiments by those skilled in the art in the field to which the embodiments belong. Therefore, the contents related to these combinations and variations should be interpreted as being included in the scope of the embodiments.

A person having ordinary knowledge in the art concerned with the present embodiment will be able to understand that it can be implemented in a modified form that does not deviate from the essential characteristics of the above-mentioned description. Therefore, the methods that have been disclosed should be considered from an explanatory point of view, not a limited point of view. The scope of the invention is not described in the foregoing description but is shown in the patent claim scope, and all differences within the equivalent scope should be interpreted as being included in the invention.

## Claims

1. An antenna, comprising:
a first layer in which a plurality of radiation slots are formed;
a second layer in which a branching structure connecting the plurality of radiation slots and a waveguide is formed at an upper portion and an upper region of the waveguide is formed at a lower portion; and
a third layer in which a lower region of the waveguide corresponding to the upper region of the waveguide formed in the second layer is formed at an upper portion, and a signal input/output part connected to the waveguide is formed at a lower portion.

2. The antenna of claim 1, wherein the plurality of radiation slots comprises four radiation slots, and the branching structure comprises a 1-4 branching structure.

3. The antenna of claim 2, wherein the branching structure comprises:
a first horn structure formed at a position corresponding to a center of the four radiation slots and connected to the waveguide; and
a second horn structure having a lower portion connected to the first horn structure and an upper portion connected to the four slots.

4. The antenna of claim 3, wherein the four radiation slots are so formed as to be spaced apart from each other, and a central axis of the first horn structure overlaps with a wall between two of the four radiation slots.

5. The antenna of claim 4, wherein the wall between the two radiation slots that overlap with the central axis of the first horn structure extends to a part of region of the second horn structure.

6. The antenna of claim 3, wherein a sum of heights of the first horn structure and the second horn structure is 0.63 to 0.73 times a signal wavelength, and the height of the second horn structure is 0.4 to 0.5 times the signal wavelength.

7. The antenna of claim 2, wherein the four radiation slots are formed in a row, and a width of the two slots disposed in a center of the four radiation slots is longer than a width of the two slots disposed at outer region.

8. The antenna of claim 7, wherein the width of the two slots disposed in the center is 0.69 times the signal wavelength, and the width of the two slots disposed at the outer region is 0.64 times the signal wavelength.

9. The antenna of claim 1, wherein the waveguide comprises:
a first waveguide connected to at least some of the plurality of radiation slots; and
a second waveguide connected to some of the plurality of radiation slots which are different from the at least some of the plurality of radiation slots connected to the first waveguide,
wherein the first waveguide and the second waveguide are formed on different layers when they intersect in a first direction.

10. The antenna of claim 9, wherein at least one of the first waveguide or the second waveguide comprises a transition path that bypasses to an other layer in which another waveguide is formed, at a region where they intersect.
